# EUROPÄISCHE PATENTSCHRIFT

(11) **EP 1 299 660 B1**
(45) Veröffentlichungstag und Bekanntmachung des Hinweises auf die Patenterteilung: **10.09.2003**
(21) Anmeldenummer: 01943540.3
(22) Anmeldetag: 23.06.2001
(51) Int. Cl.: F16H 57/04

(54) **VORRICHTUNG SOWIE VERFAHREN ZUR ZIELGENAUEN VERSORGUNG VON BAUTEILEN EINES AUTOMATGETRIEBES FÜR KRAFTFAHRZEUGE**
DEVICE AND METHOD FOR ACCURATELY SUPPLYING COMPONENTS OF AN AUTOMATIC GEARBOX FOR MOTOR VEHICLES
DISPOSITIF ET PROCEDE PERMETTANT L'ALIMENTATION CIBLEE D'ELEMENTS D'UNE BOITE DE VITESSES AUTOMATIQUE D'AUTOMOBILE

(30) Priorität: 07.07.2000 DE 10033085
(43) Veröffentlichungstag der Anmeldung: 09.04.2003
(73) Patentinhaber: ZF FRIEDRICHSHAFEN Aktiengesellschaft, 88038 Friedrichshafen (DE)
(72) Erfinder: SICH, Bernhard, 88045 Friedrichshafen (DE)
(86) Internationale Anmeldenummer: EP0107147
(87) Internationale Veröffentlichungsnummer: WO02004841

(56) Entgegenhaltungen:
- EP-A- 0 980 995
- DE-A- 10 042 749
- US-A- 4 501 172

## Beschreibung

Die vorliegende Erfindung betrifft eine Vorrichtung zur zielgenauen Versorgung von Bauteilen eines Automatgetriebes für Kraftfahrzeuge, insbesondere eines Reibradgetriebes, sowie ein dafür geeignetes Verfahren, sowie aus US-A-4 501 172, die als nächstliegender Stand der Technik betrachtet wird, bekannt ist.

Stufenlose Reibradgetriebe weisen üblicherweise koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher ist je größer der Abstand zwischen ihrer Berührungsstelle mit der Eingangsscheibe und der Drehachse ist. Die Drehzahl der Ausgangsscheibe hingegen ist um so größer je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist.

Wird ein derartiges Reibradgetriebe über einen hydrodynamischen Wandler oder eine nasslaufende Anfahrkupplung mit der Brennkraftmaschine eines Kraftfahrzeuges verbunden, so erzeugt die Kupplung im Schlupftrieb Wärme, die durch eine gezielte Zufuhr von Hydrauliköl abgeführt werden muß.

Die Betriebspunkte für die Kühlung der Anfahrkupplung und für die Kühlung sowie für die Schmierung der übrigen Getriebebauteile, d. h. der Lager und der Verzahnungen sind jedoch äußerst unterschiedlich, sodass das für das Automatgetriebe zur Verfügung stehende und diesem zugeführte Hydrauliköl in unterschiedlichen Anteilen zum einen der Anfahrkupplung und zum anderen den restlichen Getriebebauteilen zugeführt werden muß.

Aufgabe der vorliegenden Erfindung ist es, eine Vorrichtung und ein Verfahren anzugeben, mit dem in optimaler Weise das verfügbare Schmieröl zielgenau den Bauteilen eines Automatgetriebes und insbesondere eines Reibradgetriebes zugeführt wird, wobei, verglichen mit den herkömmlichen Vorrichtungen bzw. Verfahren, eine erheblich geringere Gesamthydraulikölmenge zur Verfügung gestellt werden muß.

Ausgehend von einer Vorrichtung der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben; das erfindungsgemäße Verfahren ist im unabhängigen Verfahrensanspruch 4 näher umrissen.

Die erfindungsgemäß ausgestaltete Vorrichtung zur zielgenauen Versorgung von Bauteilen eines Automatgetriebes für Kraftfahrzeuge sieht also vor, dass die das Getriebe mit Hydrauliköl versorgende Zufuhrleitung in zwei Leitungen unterteilt ist, wobei die eine Leitung in Strömungsrichtung gesehen eine Blende und ein Differenzdruckventil aufweist und die zweite Leitung ein Druckbegrenzungsventil aufweist.

Vorteilhafterweise ist das Differenzdruckventil mit einem elektrischen Drucksteller verbunden, der wiederum mit der elektronischen Getriebesteuerung verbunden ist; bei einem anderen vorteilhaften Ausführungsbeispiel ist das Druckbegrenzungsventil ebenfalls mit dem elektrischen Drucksteller verbunden.

Gemäß dem erfindungsgemäßen Verfahren zur zielgenauen Versorgung von Bauteilen eines Automatgetriebes und insbesondere eines Reibradgetriebes für Kraftfahrzeuge wird das dem Getriebe zum Zweck der Schmierung und Kühlung zugeführte Hydrauliköl durch zwei Leitungen in zwei Teilmengen aufgeteilt, wobei in der einen Leitung der Volumenstrom über eine in diese eingesetzte Blende und ein in diese eingesetztes Differenzdruckventil eingestellt wird, während in der zweiten Leitung durch ein darin eingesetztes Druckbegrenzungsventil der Druck in der ersten Leitung vor der Blende eingestellt wird. Das Differenzdruckventil in der ersten Leitung regelt den Differenzdruck an der in dieselbe Leitung eingesetzten Blende. Durch die gezielte Ansteuerung des Differenzdruckventils durch ein Stellventil in Form eines elektrischen Druckstellers, der wiederum mit der elektronischen Getriebesteuerung verbunden ist, wird der Volumenstrom in der mit der Blende und dem Differenzdruckventil versehenen ersten Leitung eingestellt. Das restliche Hydrauliköl fließt durch die zweite Leitung und wird beispielsweise den Lagerstellen der Getriebebauteile zugeführt.

Die erfindungsgemäße Vorrichtung bietet den Vorteil, dass eine erheblich geringere Hydraulikölmenge zu Zwecken der Kühlung und Schmierung bereitgestellt werden muß, wobei eine Einsparung von ca. 50 % gegenüber den herkömmlichen Automatgetrieben erzielt werden kann. Die genaue Einstellung der Hydraulikölmenge in der mit der Blende und dem Differenzdruckventil versehenen ersten Leitung ermöglicht die Einstellung und Einhaltung einer vorgegebenen Temperatur an wärmeerzeugenden Stellen im Automatgetriebe und insbesondere an der Anfahrkupplung. Neben einer Verringerung der hydraulischen Leistung, d. h. der auftretenden Verluste eines Automatgetriebes wird noch der Vorteil einer verringerten Energieaufnahme des für Schmierzwecke bereitgestellten Hydrauliköls erzielt. Auch die Auflösung und Hysterese der Volumenstromkennlinie ist verglichen mit dem herkömmlichen Automatgetriebe vorteilhafter.

Im folgenden wird die Erfindung anhand der Zeichnung näher erläutert, in der zwei vorteilhafte Ausführungsbeispiele einer erfindungsgemäßen Vorrichtung schematisch dargestellt sind.
Es zeigen:

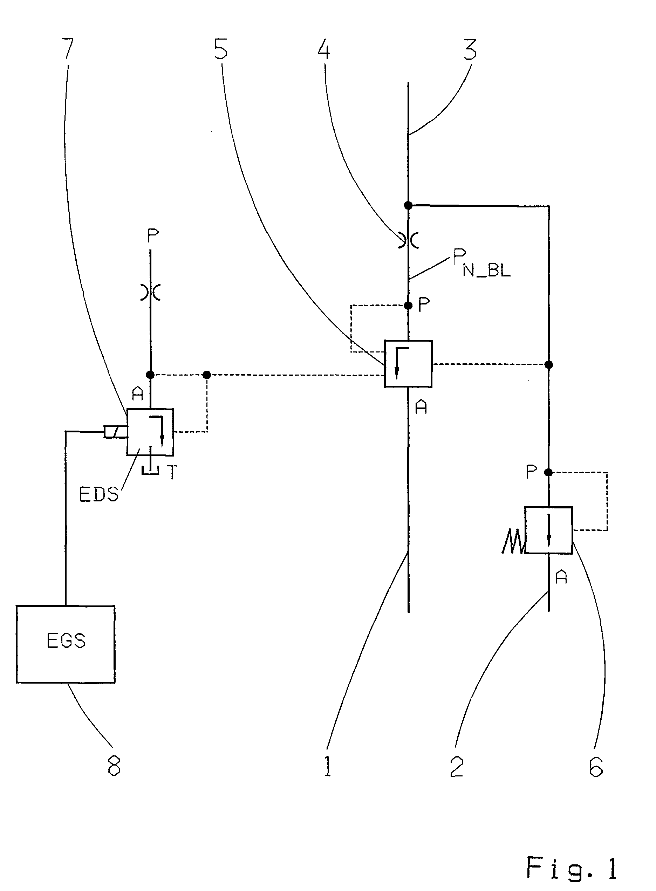

- Fig. 1: einen ersten Hydraulikölkreislauf, und
- Fig. 2: einen zweiten Hydraulikölkreislauf gemäß der Erfindung.

In den Figuren sind gleiche Teile mit gleichen Bezugszeichen versehen. Mit 3 ist eine Zufuhrleitung für Hydrauliköl für ein Automatgetriebe, das insbesondere ein Reibradgetriebe ist, bezeichnet. Die Zufuhrleitung 3 ist in zwei Leitungen 1, 2 unterteilt zur zielgenauen Versorgung der Bauteile im Automatgetriebe, die unterschiedliche Betriebspunkte für Kühlung bzw. Schmierung erfordern. Zu diesem Zweck ist in die erste Leitung 1 in Blende 4 sowie ein Differenzdruckventil 5 eingesetzt, während in die zweite Leitung 2 ein Druckbegrenzungsventil 6 eingesetzt ist.

Das Differenzdruckventil 5 in der ersten Leitung 1 ist mit einem elektrischen Drucksteller 7 verbunden, der wiederum mit der elektronischen Getriebesteuerung 8 in Verbindung steht und von dieser entsprechend den erforderlichen Betriebsparametern angesteuert wird.

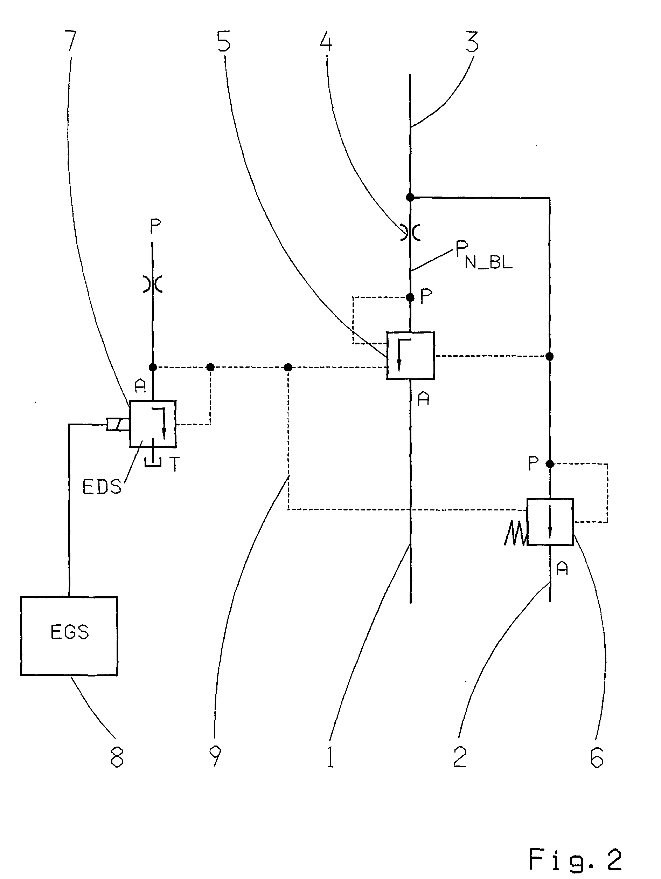

Bei dem in Figur 2 dargestellten Ausführungsbeispiel ist zusätzlich das Druckbegrenzungsventil 6 in der zweiten Leitung 2 über die gestrichelt dargestellte Leitung 9 mit dem elektrischen Drucksteller 7 und damit mit der elektronischen Getriebesteuerung 8 verbunden.

Mit der beschriebenen Anordnung wird also das für das Automatgetriebe erforderliche Hydrauliköl in zwei Teilmengen aufgeteilt und durch die Leitungen 1 und 2 gefördert, wobei in der ersten Leitung 1 der Volumenstrom über die Blende 4 und das Differenzdruckventil 5 exakt eingestellt werden kann. Das Differenzdruckventil 5 erzeugt dabei einen Differenzdruck an der Blende 4, wobei das Differenzdruckventil 5 über die elektronische Getriebesteuerung 8 und den elektrischen Drucksteller 7 angesteuert wird. Dies ermöglicht eine exakte Einstellung des Volumenstroms in der Leitung 1, die mit der wärmeerzeugenden Anfahrkupplung des Reibradgetriebes verbunden ist.

Das restliche Hydrauliköl fließt durch die Leitung 2 und dient der Schmierung der Lager bzw. der Verzahnungen, wobei das in der zweiten Leitung 2 vorgesehene Druckbegrenzungsventil 6 den Druck vor der Blende 4 einstellt. Wird das Druckbegrenzungsventil 6 über die Leitung 9 gemäß Figur 2 zusätzlich vom elektrischen Drucksteller 7 und damit von der elektronischen Getriebesteuerung 8 angesteuert, so kann der Druck in der ersten Leitung 1 vor der Blende 4 zusätzlich eingestellt werden.

Die genaue Einstellung der Hydraulikölmenge in der ersten Leitung 1 zur Einstellung einer vorgegebenen Temperatur an wärmeerzeugenden Stellen des Automatgetriebes ermöglicht es, die dem Getriebe zur Verfügung zu stellende Gesamtmenge an Hydrauliköl um ca. 50 % zu verringern. Zugleich erfolgt eine geringere Energieaufnahme bei der Schmierdruckbereitstellung.

### Bezugszeichen

- 1: Leitung
- 2: Leitung
- 3: Zufuhrleitung
- 4: Blende
- 5: Differenzdruckventil
- 6: Druckbegrenzungsventil
- 7: elektrischer Drucksteller
- 8: elektronische Getriebesteuerung
- 9: Leitung

## Patentansprüche

1. Vorrichtung zur zielgenauen Versorgung von Bauteilen eines Automatgetriebes für Kraftfahrzeuge, mit einer das Getriebe mit Hydrauliköl versorgende Zufuhrleitung (3) die in zwei Leitungen (1, 2) unterteilt ist und wobei in die erste Leitung (1) eine Blende (4) und ein Differenzdruckventil (5) und in die zweite Leitung (2) ein Druckbegrenzungsventil (6) eingesetzt ist, **dadurch gekennzeichnet, dass** die Verzweigung in die erste und zweite Leitung (1, 2) vor der Blende (4) vorgesehen ist und dass das Hydrauliköl in der ersten Leitung (1) volumenstromgesteuert zur Kühlung und das restliche Hydrauliköl in der zweiten Leitung (2) zur Schmierung verwendet wird.

2. Vorrichtung nach Anspruch 1, **dadurch gekennzeichnet, dass** das Differenzdruckventil mit einem elektrischen Drucksteller (7) verbunden ist, der mit der elektronischen Getriebesteuerung (8) verbunden ist.

3. Vorrichtung nach Ansprüchen 1 und 2, **dadurch gekennzeichnet, dass** das Druckbegrenzungsventil mit dem elektrischen Drucksteller (7) verbunden ist.

4. Verfahren zur zielgenauen Versorgung von Bauteilen eines Automatgetriebes für Kraftfahrzeuge, wobei das dem Getriebe über eine Zufuhrleitung zugeführte Hydrauliköl zum Zweck der Schmierung und Kühlung in zwei Teilmengen aufgeteilt wird, die zwei getrennte Leitungen durchfließen, wobei in der ersten Leitung der Volumenstrom des Hydrauliköls über ein Blende und ein Differenzdruckventil eingestellt wird, welches durch einen elektrischen Drucksteller angesteuert wird, der wiederum von der elektronischen Getriebesteuerung angesteuert wird, während der Druck vor der Blende in der ersten Leitung durch ein die zweite Leitung eingesetztes Druckbegrenzungsventil eingestellt wird, welches ebenfalls vom elektrischen Drucksteller und damit der elektronischen Getriebesteuerung angesteuert wird.

## Claims

1. The invention relates to a device for the accurate supply of the components of an automatic transmission for motor vehicles, with a supply line (3), which is divided into two lines (1, 2), supplying the transmission with hydraulic oil, and with an orifice (4) and a pressure-differential valve (5) being inserted in the first line (1) and a pressure-limiting valve (6) being inserted in the second line (2), **characterized in that** the bifurcation to the first and second lines (1, 2) is provided upstream of the orifice (4) and that the volume-flow-controlled hydraulic oil in the first line (1) is used for cooling and the remaining hydraulic oil in the second line (2) is used for lubrication.

2. Device according to claim 1, **characterized in that** the pressure-differential valve is linked to an electric pressure actuator (7), which is linked to the electronic control module (8).

3. Device according to the claims 1 and 2, **characterized in that** the pressure-limiting valve is linked to the electric pressure actuator (7).

4. Method for the accurate supply of the components of an automatic transmission for motor vehicles, with the hydraulic oil for lubricating and cooling fed to the transmission via a supply line being divided into two partial amounts and flowing through two separate lines, with the volumetric flow of the hydraulic oil in the first line being set by an orifice and a differential-pressure valve, which is controlled by an electric pressure actuator, which in turn is controlled by the electronic transmission control unit, while the pressure upstream of the orifice in the first line is set by a pressure-limiting valve inserted in the second line, with this valve also being controlled by the electric pressure actuator and thus by the electronic transmission control unit.

## Revendications

1. Dispositif pour l'alimentation rationnelle précise d'éléments d'une boîte de vitesses automatique pour véhicule automobile, comprenant une conduite d'amenée (3) alimentant la boîte de vitesses en huile hydraulique qui est subdivisée en deux conduites (1, 2), et dans lequel un diaphragme (4) et une soupape de pression différentielle (5) sont intercalés dans la première conduite (1), tandis qu'une soupape de limitation de la pression (6) est intercalée dans la deuxième conduite (2), **caractérisé en ce que** la division en la première et la deuxième conduite (1, 2) est prévue en amont du diaphragme (4) et **en ce que** l'huile hydraulique présente dans la première conduite (1) est utilisée pour le refroidissement, avec commande du débit volumique, et que l'huile hydraulique restante, présente dans la deuxième conduite (2), est utilisée pour la lubrification.

2. Dispositif selon la revendication 1, **caractérisé en ce que** la soupape de pression différentielle est reliée à un dispositif électrique de réglage de la pression (7) qui est relié à la commande électronique (8) de la boîte de vitesses.

3. Dispositif selon les revendications 1 et 2, **caractérisé en ce que** la soupape de limitation de la pression est reliée au dispositif électrique de réglage de la pression (7).

4. Procédé pour l'alimentation rationnelle précise d'éléments d'une boîte de vitesses automatique pour véhicule automobile dans lequel l'huile hydraulique qui est amenée à la boîte de vitesses par l'intermédiaire d'une conduite d'amenée est divisée en deux quantités partielles pour la lubrification et le refroidissement, qui parcourent deux conduites séparées, et dans lequel, dans la première conduite, le courant volumique de l'huile hydraulique est réglé au moyen d'un diaphragme et d'une soupape de pression différentielle qui est commandée par un dispositif électrique de réglage de la pression, lequel est à son tour piloté par la commande électronique de la boîte de vitesses, tandis que la pression régnant dans la première conduite en amont du diaphragme est réglée par une soupape de limitation de la pression intercalée dans la deuxième conduite, et qui est elle aussi pilotée par le dispositif électrique de la pression, et donc par la commande électronique de la boîte de vitesses.
